# EUROPÄISCHE PATENTSCHRIFT

(11) **EP 3 844 040 B1**
(45) Veröffentlichungstag und Bekanntmachung des Hinweises auf die Patenterteilung: **07.09.2022**
(21) Anmeldenummer: 19742144.9
(22) Anmeldetag: 10.07.2019
(51) Int. Cl.: B60T 8/175, B60T 8/1766

(54) **VERFAHREN ZUM BETREIBEN EINES KRAFTFAHRZEUGS SOWIE ENTSPRECHENDES KRAFTFAHRZEUG**
METHOD FOR OPERATING A MOTOR VEHICLE AND CORRESPONDING MOTOR VEHICLE
PROCÉDÉ PERMETTANT DE FAIRE FONCTIONNER UN VÉHICULE À MOTEUR ET VÉHICULE À MOTEUR CORRESPONDANT

(30) Priorität: 30.08.2018 DE 102018214763
(43) Veröffentlichungstag der Anmeldung: 07.07.2021
(73) Patentinhaber: AUDI AG, 85045 Ingolstadt (DE)
(72) Erfinder: BUROW, Clemens, 80339 München (DE); BADER, Jürgen, 80803 München (DE)
(86) Internationale Anmeldenummer: PCT/EP2019/068566
(87) Internationale Veröffentlichungsnummer: WO 2020/043378

(56) Entgegenhaltungen:
- WO-A1-2013/041311
- WO-A1-2018/028854
- DE-A1- 4 225 683
- DE-A1- 10 050 173
- DE-A1- 10 054 368
- DE-A1-102013 019 472
- DE-A1-102016 223 186
- US-A- 5 511 866
- US-A1- 2018 154 777

## Beschreibung

Die Erfindung betrifft ein Verfahren zum Betreiben eines Kraftfahrzeugs, mit einer Antriebseinrichtung, die zumindest eine elektrische Traktionsmaschine aufweist, wobei zum Bereitstellen eines Drehmoments an einem Rad des Kraftfahrzeugs an einem Steuergerät der Traktionsmaschine ein Solldrehmoment eingestellt und mittels des Steuergeräts eine Drehmomentregelung zum Einstellen eines von der Traktionsmaschine erzeugten Istdrehmoments durchgeführt wird. Die Erfindung betrifft weiterhin ein Kraftfahrzeug.

Aus dem Stand der Technik ist beispielsweise die Druckschrift US 9,707,944 B2 bekannt. Diese beschreibt eine Bremskraftsteuerungseinrichtung. Diese Steuerungseinrichtung steuert eine Betriebsbremse und eine elektrische Maschine zum Erzeugen einer Bremskraft an, wobei die Betriebsbremse und die elektrische Maschine die Bremskraft gemeinsam bereitstellen.

Die WO 2013 041 311 A1 beschreibt eine Steuereinrichtung, die eine elektrische Maschine zum Erzeugen eines Bremsmoments oder eines Beschleunigungsmoments steuert, um das Rad besser im Punkt des optimalen Schlupfes zu halten.

Es ist Aufgabe der Erfindung, ein Verfahren zum Betreiben eines Kraftfahrzeugs vorzuschlagen, welches gegenüber bekannten Verfahren Vorteile aufweist, insbesondere auf einfache Art und Weise während eines Bremsvorgangs und/oder eines Beschleunigungsvorgangs des Kraftfahrzeugs eine starke Beschleunigung beziehungsweise Verzögerung des Kraftfahrzeugs ermöglicht, wobei gleichzeitig ein stabiles Fahrverhalten des Kraftfahrzeugs sichergestellt ist.

Dies wird erfindungsgemäß mit einem Verfahren zum Betreiben eines Kraftfahrzeugs mit den Merkmalen des Anspruchs 1 erreicht. Dabei ist vorgesehen, dass an dem Steuergerät zusätzlich ein Drehzahlsollbereich eingestellt und bei Vorliegen einer Istdrehzahl des Rads in dem Drehzahlsollbereich das Istdrehmoment im Zuge der Drehmomentregelung auf das Solldrehmoment geregelt wird und bei Vorliegen der Istdrehzahl außerhalb des Drehzahlsollbereichs die Drehmomentregelung derart durchgeführt wird, dass sich die Istdrehzahl in Richtung des Drehzahlsollbereichs verändert.

Das Kraftfahrzeug verfügt über die Antriebseinrichtung, welche dem Antreiben des Kraftfahrzeugs dient, also dem Bereitstellen eines auf das Antreiben des Kraftfahrzeugs gerichteten Drehmoments. Zum Bereitstellen des Drehmoments weist die Antriebseinrichtung die elektrische Traktionsmaschine auf, welche mit dem Rad des Kraftfahrzeugs gekoppelt oder zumindest koppelbar ist.

Zum Bereitstellen des Drehmoments an dem Rad werden die Antriebseinrichtung und mithin die Traktionsmaschine entsprechend angesteuert. So wird zum Bereitstellen des Drehmoments an dem Rad das Solldrehmoment an dem Steuergerät der Traktionsmaschine eingestellt. Das Solldrehmoment kann beispielsweise einem Vorgabedrehmoment entsprechen, welches wiederum von einem Fahrer des Kraftfahrzeugs und/oder einer Fahrerassistenzeinrichtung des Kraftfahrzeugs vorgegeben ist.

Das Steuergerät ist zum Durchführen der Drehmomentregelung vorgesehen und ausgebildet. Die Drehmomentregelung umfasst das regelnde Einstellen des von der Traktionsmaschine für das Rad bereitgestellten Istdrehmoments. Zumindest zeitweise wird im Rahmen der Drehmomentregelung das von der Traktionsmaschine erzeugte Istdrehmoment auf das Solldrehmoment eingestellt. Als Stellgröße dient insoweit das Istdrehmoment, wohingegen als Regelgröße beispielsweise die Differenz zwischen dem Istdrehmoment und dem Solldrehmoment herangezogen wird.

Um das Fahrverhalten des Kraftfahrzeugs zu verbessern, wird an dem Steuergerät, welches der Durchführung der Drehmomentregelung dient, zusätzlich zu dem Solldrehmoment der Drehzahlsollbereich eingestellt. Der Drehzahlsollbereich beschreibt den Drehzahlbereich, in welchem die Istdrehzahl des Rads idealerweise liegt. Der Drehzahlsollbereich kann zur Erzielung verschiedener Vorteile auf Grundlage verschiedener Randbedingungen gewählt werden. In jedem Fall ist es jedoch vorgesehen zu prüfen, ob die Istdrehzahl in dem Drehzahlsollbereich liegt. Ist dies der Fall, so wird im Rahmen der Drehzahlregelung das Istdrehmoment, welches die Traktionsmaschine bereitstellt, auf das Solldrehmoment eingeregelt, also regelnd auf das Solldrehmoment eingestellt.

Liegt hingegen die Istdrehzahl außerhalb des Drehzahlsollbereichs, so kann das Solldrehmoment bei der Drehmomentregelung außer Acht bleiben oder zumindest nur untergeordnet Beachtung finden. Vielmehr wird nun im Rahmen der Drehmomentregelung eine Drehzahlregelung derart durchgeführt, dass sich die Istdrehzahl in Richtung des Drehzahlsollbereichs verändert. Diese Drehzahlregelung wird vorzugsweise durchgeführt, bis die Istdrehzahl in dem Drehzahlsollbereich liegt. Anschließend kann wieder das Istdrehmoment in Richtung des Solldrehmoments geregelt werden, nämlich vorzugsweise solange, bis die Istdrehzahl wieder außerhalb des Drehzahlsollbereichs liegt. Vorzugsweise wird auch im Rahmen der Drehzahlregelung, also falls die Istdrehzahl außerhalb des Drehzahlsollbereichs liegt, das Istdrehmoment soweit als möglich auf dem Solldrehmoment gehalten oder zumindest in Richtung des Solldrehmoments verändert, sofern die Istdrehzahl dies zulässt.

Durch die zusätzliche Vorgabe des Drehzahlsollbereichs kann in zahlreichen Fahrsituationen die Fahrstabilität des Kraftfahrzeugs und/oder die Beschleunigung des Kraftfahrzeugs verbessert werden. In diesem Zuge sei darauf hingewiesen, dass unter dem Beschleunigen sowohl ein positives Beschleunigen als auch ein negatives Beschleunigen verstanden wird. Im Falle des positiven Beschleunigens nimmt die Geschwindigkeit des Kraftfahrzeugs in seiner Hauptfahrrichtung, also nach vorne, zu. Im Falle der negativen Beschleunigung verringert sich die Geschwindigkeit in die Hauptfahrrichtung. Das negative Beschleunigen kann insoweit auch als Verzögern oder Bremsen des Kraftfahrzeugs bezeichnet werden.

Die zusätzliche Vorgabe des Drehzahlsollbereichs ist beispielsweise bei einem Bremsvorgang des Kraftfahrzeugs sinnvoll. Das maximal an dem Rad absetzbare Drehmoment wird durch eine Schlupfkurve bestimmt, welche den Zusammenhang zwischen dem absetzbaren Drehmoment und dem Schlupf wiedergibt. Der sich in der Schlupfkurve niederschlagende Zusammenhang zwischen Radschlupf und maximal absetzbarem Drehmoment gilt sowohl für positive als auch negative Drehmomente. Um eine maximale Beschleunigung, insbesondere eine maximale Verzögerung, zu erreichen, ist es notwendig, das an dem Rad anliegende Drehmoment derart einzustellen, dass es einem Drehmoment entspricht, für welches die Schlupfkurve ein Maximum, insbesondere ein globales Maximum, aufweist.

Üblicherweise steigt das absetzbare Drehmoment ausgehend von Null mit zunehmendem Schlupf zunächst an, insbesondere linear. Anschließend steigt es bis zu dem maximal absetzbaren Drehmoment an, üblicherweise nicht linear, um anschließend mit weiter zunehmendem Schlupf rasch abzufallen. Ein Schlupf oberhalb des Schlupfs, welcher bei dem maximal absetzbaren Drehmoment auftritt, sollte also vermieden werden, weil das absetzbare Drehmoment mit zunehmendem Schlupf stark absinkt.

Durch die beschriebene Vorgehensweise mit dem Einstellen des Solldrehmoments und des Drehzahlsollbereichs an dem Steuergerät soll nun im Rahmen der Drehmomentregelung eine Art Antiblockierregelung durchgeführt werden. Hierbei wird die Traktionsmaschine verwendet, um auf das Rad ein Bremsdrehmoment aufzuprägen, wobei vorzugsweise dieses Bremsdrehmoment dem maximal absetzbaren Drehmoment entspricht.

Wäre die aktuelle Schlupfkurve für das Rad bekannt, so müsste lediglich unter Verwendung der Traktionsmaschine das dem maximal absetzbaren Drehmoment entsprechende Drehmoment an dem Rad angelegt werden. Dies ist in der Praxis jedoch üblicherweise nicht realisierbar, weil zum einen die Schlupfkurve nicht exakt bekannt ist und sich zum anderen permanent verändert. Weiterhin kann eine Momentengenauigkeit der Traktionsmaschine stark streuen.

Es ist daher sinnvoll, den Schlupf auszuregeln, anstatt über das Drehmoment das Maximum der Schlupfkurve zu erreichen, weil die Änderung des optimalen Schlupfs während der Verzögerung des Kraftfahrzeugs wesentlich geringer ist als die Änderung des maximal absetzbaren Drehmoments. Zudem kann an der Traktionsmaschine wesentlich rascher eine bestimmte Drehzahl eingestellt werden als ein Drehmoment. Ersteres führt dazu, dass weniger dynamische Regeleingriffe notwendig sind, letzteres zu einer höheren Stellgenauigkeit.

Weiterhin kann das beschriebene Verfahren für eine optimale Drehmomentverteilung zwischen mehreren Radachsen des Kraftfahrzeugs und/oder zwischen mehreren Rädern derselben Radachse herangezogen werden. In andern Worten ist das Rad beispielsweise einer ersten Radachse und ein weiteres Rad des Kraftfahrzeugs einer von der ersten Radachse verschiedenen zweiten Radachse zugeordnet, wobei die Radspur des weiteren Rads der Radspur des Rads entspricht.

Vorzugsweise wird für das weitere Rad dieselbe Vorgehensweise durchgeführt wie für das Rad. Es ist insoweit vorzugsweise vorgesehen, dass zum Bereitstellen eines Drehmoments an dem weiteren Rad an dem Steuergerät oder einem weiteren Steuergerät einer dem weiteren Rad zugeordneten weiteren Traktionsmaschine ein Solldrehmoment eingestellt und mittels des Steuergeräts oder des weiteren Steuergeräts eine Drehmomentregelung zum Einstellen eines von der weiteren Traktionsmaschine erzeugten Istdrehmoments durchgeführt wird. Dabei ist weiter bevorzugt vorgesehen, dass an dem Steuergerät oder dem weiteren Steuergerät zusätzlich ein Drehzahlsollbereich eingestellt und bei Vorliegen einer Istdrehzahl des weiteren Rads in dem Drehzahlsollbereich das Istdrehmoment im Zuge der Drehmomentregelung auf das Solldrehmoment geregelt wird und bei Vorliegen der Istdrehzahl außerhalb des Drehzahlsollbereichs die Drehmomentregelung derart durchgeführt wird, dass sich die Istdrehzahl in Richtung des Drehzahlsollbereichs verändert. Das Solldrehmoment und/oder der Drehzahlsollbereich können hierbei für das Rad und das weitere Rad jeweils verschieden oder identisch gewählt sein.

Die Erfindung sieht vor, dass der Drehzahlsollbereich nach unten von einer Drehzahluntergrenze und nach oben von einer Drehzahlobergrenze begrenzt ist, die anhand einer Fahrgeschwindigkeit des Kraftfahrzeugs und einem Schlupfoptimum des Rads ermittelt werden.

Der Drehzahlsollbereich wird von der Drehzahluntergrenze und von der Drehzahlobergrenze begrenzt.

Sowohl die Drehzahluntergrenze als auch die Drehzahlobergrenze werden (jeweils) anhand der Fahrgeschwindigkeit und des Schlupfoptimums des Rads ermittelt.

Die Fahrgeschwindigkeit wird beispielsweise anhand wenigstens eines Sensors gemessen und/oder abgeschätzt. Das Schlupfoptimum des Rads wird vorzugsweise abgeschätzt, insbesondere ebenfalls unter Verwendung eines geeigneten Sensors. Beispielsweise wird das Schlupfoptimum aus der Schlupfkurve ermittelt, welche wiederum durch entsprechendes Betreiben des Kraftfahrzeugs ermittelt wird.

Beispielsweise wird zum Ermitteln der Schlupfkurve ein an einer Hinterachse des Kraftfahrzeugs anliegendes Drehmoment von einem an einer Vorderachse des Kraftfahrzeugs anliegenden Drehmoment verschieden gewählt. Bevorzugt werden für die an der Vorderachse und der Hinterachse anliegende Drehmomente unterschiedliche Werte abgefahren und die jeweiligen Raddrehzahlen an der Vorderachse und der Hinterachse gemessen. Aus den Drehzahlen lässt sich nachfolgend der Schlupf beziehungsweise die Schlupfkurve bestimmen. Das Schlupfoptimum entspricht dem Schlupf bei dem maximal absetzbaren Drehmoment beziehungsweise liegt bei diesem vor.

Bevorzugt sind die Drehzahluntergrenze und die Drehzahlobergrenze voneinander verschieden, insbesondere ist die Drehzahlobergrenze größer als die Drehzahluntergrenze. Beispielsweise wird die Drehzahluntergrenze aus der Fahrgeschwindigkeit und einem Schlupf des Rads ermittelt, welcher um einen bestimmten Betrag über dem Schlupfoptimum liegt und die Drehzahlobergrenze aus der Fahrgeschwindigkeit und einem Schlupf, welcher um einen bestimmten Wert unter dem Schlupfoptimum liegt. Der bestimmte Wert ist vorzugsweise für die Drehzahluntergrenze und die Drehzahlobergrenze derselbe, sodass der Schlupf für die Drehzahluntergrenze und der Schlupf für die Drehzahlobergrenze symmetrisch bezüglich des Schlupfoptimums gewählt sind. In anderen Worten wird die Drehzahluntergrenze entsprechend einem negativen Schlupfoptimum und die Drehzahlobergrenze entsprechend einem positivem Schlupfoptimum gewählt. Vorzugsweise liegen die Drehzahluntergrenze und die Drehzahlobergrenze in jedem Fall jeweils zwischen dem negativen Schlupfoptimum und dem positiven Schlupfoptimum (diese Werte jeweils eingeschlossen).

Im Rahmen einer weiteren Ausgestaltung der Erfindung kann vorgesehen sein, dass bei einem Bremsvorgang des Kraftfahrzeugs ein erster Teil eines an dem Rad anliegenden Bremsdrehmoments mittels einer Betriebsbremse und ein zweiter Teil mittels der Traktionsmaschine erzeugt wird, wobei der erste Teil kleiner gewählt wird als ein in dem Schlupfoptimum über das Rad absetzbare Drehmoment. Das Bremsdrehmoment, welches an dem Rad anliegen soll, wird also in die beiden Teile, nämlich den ersten Teil und den zweiten Teil aufgeteilt. Der erste Teil wird mittels der Betriebsbremse bereitgestellt, wohingegen der zweite Teil von der Traktionsmaschine erzeugt wird.

Das mittels der Betriebsbremse an dem Rad einstellbare Drehmoment beziehungsweise Bremsdrehmoment kann üblicherweise lediglich langsamer eingeregelt werden als das mittels der Traktionsmaschine einstellbare Drehmoment. Aus diesem Grund ist es nun vorgesehen, den ersten Teil derart zu wählen, dass er kleiner ist als das maximal absetzbare Drehmoment, also das in dem Schlupfoptimum über das Rad absetzbare Drehmoment. Auf diese Weise wird sichergestellt, dass der erste Teil des Bremsdrehmoments allein keine Überschreitung des maximal absetzbaren Drehmoments bewirkt.

Beispielsweise beträgt der erste Teil des Bremsdrehmoments höchstens 90 %, höchstens 80 %, höchstens 75 %, höchstens 70 %, höchstens 60 % oder höchstens 50 % des maximal absetzbaren Drehmoments. Der Rest des angeforderten Bremsdrehmoments wird in Form des zweiten Teils mittels der Traktionsmaschine bereitgestellt und ist rasch ausregelbar. Der zweite Teil wird dabei derart gewählt, dass das Bremsdrehmoment insgesamt dem maximal absetzbaren Drehmoment entspricht. Auf diese Weise wird ein besonders effektiver Bremsvorgang des Kraftfahrzeugs umgesetzt.

Eine weitere Ausgestaltung der Erfindung sieht vor, dass bei dem Bremsvorgang der zweite Teil des Bremsdrehmoments schneller aufgebaut wird als der erste Teil, wobei der zweite Teil des Bremsdrehmoments vergrößert wird, bis die Summe aus dem ersten Teil und dem zweiten Teil einem Sollbremsdrehmoment entspricht, und wobei nach dem Erreichen des Sollbremsdrehmoments durch die Summe aus dem ersten Teil und dem zweiten Teil der erste Teil bei dem Sollbremsdrehmoment entsprechender Summe weiter vergrößert wird. Üblicherweise ist mittels der Traktionsmaschine rascher das Bremsdrehmoment an dem Rad aufbaubar als mittels der Betriebsbremse. Der zweite Teil des Bremsdrehmoments wird insoweit schneller aufgebaut als der erste Teil.

Der erste Teil des Bremsdrehmoments wird jedoch auch nach dem Erreichen des Sollbremsdrehmoments durch die Summe aus dem ersten Teil und dem zweiten Teil weiter vergrößert, nämlich bis er sein vorgesehenes Maximum erreicht hat. Vor dem Erreichen des Sollbremsdrehmoments durch die Summe aus dem ersten Teil und dem zweiten Teil werden der erste Teil und der zweite Teil des Bremsdrehmoments unabhängig voneinander vergrößert. Ist das Sollbremsdrehmoment jedoch erreicht, so soll der erste Teil weiter vergrößert werden, wobei jedoch die Summe der beiden Teile weiterhin dem Sollbremsdrehmoment entsprechen soll.

Das bedeutet schlussendlich, dass mit dem weiteren Vergrößern des ersten Teils des Sollbremsdrehmoments der zweite Teil verringert wird, nämlich derart, dass die Summe aus beiden Teilen weiterhin dem Sollbremsdrehmoment entspricht. Hierdurch wird ein äußerst rascher Aufbau des Bremsdrehmoments erreicht, nämlich unter Verwendung der Traktionsmaschine. Mithilfe der Betriebsbremse, welche vorzugsweise eine hydraulische Bremse ist, wird eine Grundlast des Bremsdrehmoments bereitgestellt. Mittels der Traktionsmaschine wird hingegen drehzahlbasiert ein zusätzliches Moment erzeugt, welches ein Verzögern des Kraftfahrzeugs mit maximal absetzbarem Drehmoment sicherstellt.

Ändert sich während des Bremsvorgangs das Sollbremsdrehmoment, so werden der erste Teil und der zweite Teil des Bremsdrehmoments stets nachgeführt. Dieses Nachführen erfolgt dabei derart, dass stets ein zuverlässiges Bereitstellen des Sollbremsdrehmoments möglich ist. Insbesondere ist es vorgesehen, dass der erste Teil stets mindestens 50 %, mindestens 60 %, mindestens 70 % oder mindestens 75 % des Sollbremsdrehmoments entspricht. Unterschreitet der erste Teil diesen Wert, so wird er vergrößert, bis er ihn erreicht hat. Entsprechend wird der zweite Teil derart verändert, dass die Summe aus den beiden Teilen weiterhin dem Sollbremsdrehmoment entspricht.

Hierdurch werden die Drehmomentpuffer sowohl der Betriebsbremse als auch der Traktionsmaschine aufrechterhalten. Sollte es vorkommen, dass während des Bremsvorgangs bereits der erste Teil des Bremsdrehmoments zu einem Blockieren des Rads führt, so kann der zweite Teil derart gewählt werden, dass er diesem Verhalten entgegenwirkt. Beispielsweise wird der zweite Teil rasch auf Null heruntergefahren. Alternativ kann sogar der zweite Teil ein von dem ersten Teil verschiedenes Vorzeichen aufweisen, sodass mittels der Traktionsmaschine der Betriebsbremse entgegengearbeitet wird, um das Blockieren des Rads zu verhindern beziehungsweise zu beenden. Zusätzlich oder alternativ kann es vorgesehen sein, dass für den ersten Teil des Bremsdrehmoments ein Antiblockierverfahren durchgeführt wird, also die Betriebsbremse periodisch geöffnet und wieder zum Bewirken des ersten Teils des Bremsdrehmoments eingestellt wird.

Eine besonders bevorzugte weitere Ausführungsform der Erfindung sieht vor, dass bei einem Beschleunigungsvorgang des Kraftfahrzeugs bei Überschreiten der Drehzahlobergrenze durch die Istdrehzahl des Rads das Istdrehmoment reduziert wird, bis die Istdrehzahl kleiner oder gleich der Drehzahlobergrenze ist, und das reduzierte Istdrehmoment oder die Differenz zwischen dem Solldrehmoment und dem reduzierten Istdrehmoments nach oder während des Reduzierens an ein weiteres Steuergerät übermittelt wird. Sobald die Istdrehzahl des Rads die Drehzahlobergrenze überschreitet, so wird darauf geschlossen, dass das Rad durchdreht beziehungsweise das Rad mit einem Drehmoment beaufschlagt ist, welches größer ist als das maximal absetzbare Drehmoment. In diesem Fall soll die Istdrehzahl des Rads verringert werden, bis sie wieder kleiner oder gleich der Drehzahlobergrenze ist. Hierdurch wird das von der Traktionsmaschine an dem Rad bereitgestellte Istdrehmoment verringert. Das reduzierte Istdrehmoment beziehungsweise der Betrag, um welchen das Istdrehmoment ausgehend von dem Solldrehmoment reduziert wurde, wird bereits während des Reduzierens oder erst nach Abschluss des Reduzierens an das weitere Steuergerät übermittelt.

Eine derartige Vorgehensweise ist insbesondere vorgesehen, falls zusätzlich zu der Traktionsmaschine, mittels welcher das Rad des Kraftfahrzeugs antreibbar ist, eine weitere Traktionsmaschine vorliegt, mittels welcher ein weiteres Rad des Kraftfahrzeugs antreibbar ist. Vorzugsweise sind das Rad und das weitere Rad unterschiedlichen Radachsen des Kraftfahrzeugs zugeordnet, beispielsweise das Rad einer Hinterachse oder einer Vorderachse des Kraftfahrzeugs und das weitere Rad der jeweils anderen Radachse, wobei das Rad und das weitere Rad derselben Radspur zugeordnet sind. Das weitere Steuergerät dient beispielsweise dazu, für die Traktionsmaschine und die weitere Traktionsmaschine jeweils ein Solldrehmoment zu ermitteln und an diesen einzustellen.

Es ist vor dem Hintergrund der vorstehenden Ausführungen also bevorzugt vorgesehen, dass bei dem Beschleunigungsvorgang des Kraftfahrzeugs bei Überschreiten der Drehzahlobergrenze durch die Istdrehzahl des Rads das Istdrehmoment reduziert wird, bis die Istdrehzahl kleiner oder gleich der Drehzahlobergrenze ist, und die Differenz zwischen dem Solldrehmoment und dem reduzierten Istdrehmoments dem weiteren Rad zusätzlich zugeschlagen wird. Die Differenz wird also auf das für das weitere Rad beziehungsweise die weitere Traktionsmaschine geltende Solldrehmoment aufgeschlagen beziehungsweise zu diesem hinzuaddiert. In anderen Worten ist eine absolute Drehzahlbegrenzung beschrieben.

Eine bevorzugte Weiterbildung der Erfindung sieht vor, dass das Rad einer ersten Radachse und ein weiteres Rad des Kraftfahrzeug einer von der ersten Radachse verschiedenen zweiten Radachse zugeordnet sind, wobei zum Bereitstellen eines Drehmoments an dem weiteren Rad an einem weiteren Steuergerät einer weiteren Traktionsmaschine ein weiteres Solldrehmoment eingestellt und mittels des weiteren Steuergeräts eine Drehmomentregelung zum Einstellen eines von der weiteren Traktionsmaschine erzeugten weiteren Istdrehmoments durchgeführt wird, wobei dem weiteren Solldrehmoment die Differenz zwischen dem Solldrehmoment und dem reduzierten Istdrehmoment zugeschlagen wird.

Für die weitere Traktionsmaschine, das weitere Steuergerät und das weitere Rad können die Ausführungen im Rahmen dieser Beschreibung für die Traktionsmaschine, das Steuergerät und das Rad zusätzlich herangezogen werden. Bevorzugt sind die weitere Traktionsmaschine, das weitere Steuergerät und das weitere Rad also analog zu der Traktionsmaschine, dem Steuergerät und dem Rad ausgestaltet, mit dem Unterschied, dass das weitere Rad einer anderen Radachse zugeordnet ist als das Rad.

An dem Steuergerät wird das Solldrehmoment und an dem weiteren Steuergerät das weitere Solldrehmoment eingestellt. Das Solldrehmoment und das weitere Solldrehmoment werden beispielsweise von einem Zentralsteuergerät aus einem Vorgabegesamtdrehmoment ermittelt und an das Steuergerät und das weitere Steuergerät übermittelt. Um die Reduzierung des Istdrehmoments an dem Rad durch entsprechendes einstellen der Traktionsmaschine auszugleichen, soll das Drehmoment, um welches das Istdrehmoment der Traktionsmaschine ausgehend von dem Solldrehmoment reduziert wurde, von der weiteren Traktionsmaschine über das an ihr eingestellte weitere Solldrehmoment zusätzlich an dem weiteren Rad angelegt werden.

Das bedeutet, dass bei einer Reduzierung des Istdrehmoments an einer der Radachsen aufgrund der Drehzahlbegrenzung auf die jeweilige Drehzahlobergrenze das Drehmoment an der jeweils anderen Radachse um den Betrag der Reduzierung vergrößert wird. Dies gilt selbstverständlich bevorzugt in beide Richtungen, sodass eine Drehmomentreduzierung an der ersten Radachse durch eine Drehmomenterhöhung an der zweiten Radachse und eine Drehmomentreduzierung an der zweiten Radachse durch eine Drehmomenterhöhung an der ersten Radachse ausgeglichen wird. Im Falle der Zuordnung des Rads zu der ersten Radachse und des weiteren Rads zu der zweiten Radachse wird bevorzugt unter der Drehzahl des Rads eine Drehzahl der ersten Radachse und/oder eine mittlere Drehzahl von an der ersten Radachse vorliegenden Rädern verstanden. Analog ist die Drehzahl des weiteren Rads eine Drehzahl der zweiten Radachse und/oder eine mittlere Drehzahl von an der zweiten Radachse vorliegenden weiteren Rädern.

Eine bevorzugte weitere Ausführungsform der Erfindung sieht vor, dass ein Zentralsteuergerät ein Vorgabegesamtdrehmoment in ein erstes Vorgabedrehmoment und ein zweites Vorgabedrehmoment aufteilt, wobei das Solldrehmoment gleich dem ersten Vorgabedrehmoment und das weitere Solldrehmoment gleich dem zweiten Vorgabedrehmoment gesetzt und anschließend das Solldrehmoment an dem Steuergerät und das weitere Solldrehmoment an dem weiteren Steuergerät eingestellt werden, wobei vor dem Einstellen dem weiteren Solldrehmoment die Differenz zwischen dem Solldrehmoment und dem reduzierten Istdrehmoment zugeschlagen wird.

Das Vorgabegesamtdrehmoment ist beispielsweise ein von dem Fahrer des Kraftfahrzeugs und/oder einer Fahrerassistenzeinrichtung des Kraftfahrzeugs vorgegebene Drehmoment. Dieses wird in das erste Vorgabedrehmoment und das zweite Vorgabedrehmoment aufgeteilt, sodass die Summe aus den beiden Vorgabedrehmomenten dem Vorgabegesamtdrehmoment entspricht. Dieses Aufteilen erfolgt beispielsweise gemäß einer vorgegebenen Aufteilung, gemäß welcher ein bestimmter Anteil des Vorgabegesamtdrehmoments an einer Hinterachse und der Rest an der Vorderachse anliegen soll.

Das Solldrehmoment wird nun gleich dem ersten Vorgabedrehmoment und das weitere Solldrehmoment gleich dem zweiten Vorgabedrehmoment gesetzt. Anschließend wird eine Korrektur des Solldrehmoments und/oder des weiteren Solldrehmoments vorgenommen. Insbesondere wird die Differenz zwischen dem Solldrehmoment und dem reduzierten Istdrehmoment dem weiteren Solldrehmoment zugeschlagen. Erfolgt auch für die weitere Traktionsmaschine beziehungsweise das weitere Rad eine Reduktion des Istdrehmoments, so wird dem Solldrehmoment die Differenz zwischen dem weiteren Solldrehmoment und dem weiteren reduzierten Istdrehmoment zugeschlagen. Anschließend wird das Solldrehmoment an dem Steuergerät und das weitere Solldrehmoment an dem weiteren Steuergerät eingestellt.

Das Aufteilen des Vorgabegesamtdrehmoments in das erste Vorgabedrehmoment und das zweite Vorgabedrehmoment kann beispielsweise im Rahmen einer Vorsteuerung erfolgen, sodass im Idealfall an dem Steuergerät und dem weiteren Steuergerät Solldrehmomente eingestellt werden, welche dem jeweils maximal absetzbaren Drehmoment an dem entsprechenden Rad entsprechen. Zur Vorsteuerung kann beispielsweise wenigstens eine Umgebungsbedingung herangezogen werden, beispielsweise eine Außentemperatur, eine Neigung eines Untergrunds, auf welchem das Kraftfahrzeug bewegt wird, ein Niederschlagsparameter und/oder eine Luftfeuchtigkeit.

Der Niederschlagsparameter entspricht beispielsweise einem Schaltzustand eines Scheibenwischers des Kraftfahrzeugs und gibt insoweit an, ob ein Niederschlag vorliegt oder nicht. In jedem Fall kann es vorgesehen sein, bei einer Drehzahlbegrenzung der Traktionsmaschine und/oder der weiteren Traktionsmaschine das jeweils vorliegende Istdrehmoment als maximal absetzbares Drehmoment zwischenzuspeichern. Auch dieses maximal absetzbare Drehmoment, welches für die Traktionsmaschine und/oder die weitere Traktionsmaschine (jeweils) vorliegt, kann zur Vorsteuerung herangezogen werden, um die Notwendigkeit für die Drehzahlbegrenzung im Idealfall zu verhindern.

Mit der beschriebenen Vorgehensweise kann sichergestellt werden, dass stets das maximal mögliche Drehmoment über das Rad und/oder das weitere Rad abgesetzt wird, sodass das Beschleunigungsverhalten des Kraftfahrzeugs deutlich verbessert ist. Aufgrund der der Drehmomentregelung der Traktionsmaschine und/oder der weiteren Traktionsmaschine überlagerten Drehzahlregelung, welche eine höhere Priorität genießt als die Drehmomentregelung, wird ein sehr schnelles Regelverhalten erzielt.

Eine bevorzugte Ausgestaltung der Erfindung sieht vor, dass das Rad und das weitere Rad derselben der Radachsen und unterschiedlichen Radspuren zugeordnet oder unterschiedlichen der Radachsen und derselben Radspur zugeordnet sind, wobei ein Differenzdrehzahlmaximum und ein Differenzdrehzahlminimum für eine Drehzahldifferenz zwischen der Drehzahl des Rads und der Drehzahl des weiteren Rads ermittelt werden und die Drehzahlobergrenze für das Rad aus der Istdrehzahl des weiteren Rads und dem Differenzdrehzahlmaximum und die Drehzahlobergrenze für das weitere Rad aus der Istdrehzahl des Rads und dem Differenzdrehzahlminimum ermittelt wird. In anderen Worten wird die Einhaltung einer Differenzdrehzahl beschrieben.

Es ist nun also beispielsweise vorgesehen, dass die Räder nicht mehr unterschiedlichen Radachsen, sondern vielmehr derselben Radachse zugeordnet sind, jedoch verschiedenen Radspuren. Das bedeutet, dass die Räder auf unterschiedlichen Seiten des Kraftfahrzeugs vorliegen. Beispielsweise ist das Rad ein linkes Rad und das weitere Rad ein rechtes Rad. Es kann jedoch auch vorgesehen sein, dass die Räder unterschiedlichen Radachsen zugeordnet sind. In diesem Fall sind die Räder derselben Radspur zugeordnet.

Aus den Ausführungen im Rahmen dieser Beschreibung wird deutlich, dass das Kraftfahrzeug über einen radindividuellen Antrieb beziehungsweise einen Einzelradantrieb verfügen kann, wobei das Rad mittels der Traktionsmaschine und das weitere Rad mittels der weiteren Traktionsmaschine antreibbar ist. Das bedeutet, dass zwischen dem Rad und dem weiteren Rad keine unmittelbare mechanische Kopplung vorliegt, sondern lediglich mittelbar über den Untergrund, auf welchem sie sich befinden.

Um ein hervorragendes Fahrverhalten des Kraftfahrzeugs sicherzustellen, ist es daher notwendig, die beiden Räder mit zumindest ähnlichen Drehzahlen, idealerweise identischen Drehzahlen, anzutreiben. Gleichzeitig sollen jedoch, insbesondere während einer Kurvenfahrt des Kraftfahrzeugs, unterschiedliche Drehzahlen der Räder zugelassen werden. Hierzu wird ein Differenzzahldrehzahlband festgelegt, welches nach unten von dem Differenzdrehzahlminimum und nach oben von dem Differenzdrehzahlmaximum begrenzt ist. Das Differenzdrehzahlmaximum stellt einen maximal zulässigen Wert für die Drehzahldifferenz und das Differenzdrehzahlminimum einen minimal zulässigen Wert für die Drehzahldifferenz dar, wobei die Drehzahldifferenz die Differenz zwischen der Drehzahl des Rads und der Drehzahl des weiteren Rads beschreibt.

Die vorstehend bereits erwähnte Drehzahlobergrenze wird für das Rad nun aus der Istdrehzahl des weiteren Rads und dem Differenzdrehzahlmaximum und die Drehzahlobergrenze für das weitere Rad aus der Istdrehzahl des Rads und dem Differenzdrehzahlminimum ermittelt. Beispielsweise ergibt sich die Drehzahlobergrenze für das Rad aus der Istdrehzahl des weiteren Rads zuzüglich des Differenzdrehzahlmaximums und die Drehzahlobergrenze für das weitere Rad aus der Istdrehzahl des Rads abzüglich des Differenzdrehzahlminimums, wobei das Differenzdrehzahlmaximum positiv und das Differenzdrehzahlminimum negativ ist. Mit einer derartigen Vorgehensweise wird auch für das radindividuell angetriebene Kraftfahrzeug das Verhalten einer Quersperre zwischen den Rädern mit hoher Genauigkeit abgebildet, sodass ein hoher Fahrkomfort und/oder eine gute Traktion beziehungsweise eine gute Fahrdynamik gewährleistet ist, insbesondere für die Ausgestaltung, gemäß welcher die Räder unterschiedlichen Radspuren zugeordnet sind und an derselben oder an unterschiedlichen Radachsen vorliegen.

Das Differenzdrehzahlminimum und das Differenzdrehzahlmaximum sind vorzugsweise voneinander verschieden, insbesondere ist das Differenzdrehzahlmaximum größer als das Differenzdrehzahlminimum. Beispielsweise können das Differenzdrehzahlmaximum und das Differenzdrehzahlminimum aus der Fahrgeschwindigkeit des Kraftfahrzeugs ermittelt werden. Zusätzlich kann ein Lenkwinkel des Kraftfahrzeugs bei dem Ermitteln des Differenzdrehzahlmaximums und des Differenzdrehzahlminimums Verwendung finden.

Schließlich kann im Rahmen einer bevorzugten weiteren Ausgestaltung der Erfindung vorgesehen sein, dass zusätzlich eine Differenzdrehmomentobergrenze bestimmt wird und die Drehmomentregelung für das Rad und für das weitere Rad derart durchgeführt wird, dass die Differenz zwischen dem an dem Rad anliegenden Istdrehmoment und dem an dem weiteren Rad anliegenden weiteren Istdrehmoment kleiner oder gleich der Differenzdrehmomentobergrenze ist. Werden lediglich die Drehzahlobergrenzen für das Rad und das weitere Rad festgelegt, so könnte der Fall eintreten, dass das gesamte Vorgabegesamtdrehmoment über das Rad beziehungsweise das weitere Rad abgesetzt werden soll beziehungsweise die Differenz zwischen den an dem Rad und dem weiteren Rad eingestellten Solldrehmomenten beziehungsweise den an diesen anliegenden Istdrehmomenten ein unterwünscht großes Gierdrehmoment auf das Kraftfahrzeug bewirken. Um dies zu vermeiden, wird zusätzlich zu der Drehzahl die Differenz zwischen den Istdrehmomenten begrenzt, nämlich auf die Differenzdrehmomentobergrenze.

Es können nun folgende Fälle unterschieden werden: Tritt während des Beschleunigungsvorgangs eine Drehmomentreduktion an einem der Räder auf, so wird das für das jeweils andere der Räder eingestellte Solldrehmoment entsprechend vergrößert. Ist keine weitere Verschiebung des Drehmoments mehr möglich, beispielsweise weil der Antrieb des jeweils anderen Rads bereits ein Istdrehmoment bereitstellt, welches einem maximal einstellbaren Drehmoment beziehungsweise dem Nenndrehmoment der jeweiligen Traktionsmaschine entspricht, so ist es beispielsweise vorgesehen, die zugelassene Differenzdrehzahl zu vergrößern, nämlich durch entsprechendes Anpassen des Differenzdrehzahlmaximums und/oder des Differenzdrehzahlminimums, bis das über das Rad und das weitere Rad absetzbare Drehmoment, also die Summe der beiden Istdrehmomente, dem Vorgabegesamtdrehmoment entspricht.

Wird beispielsweise das Drehmoment für das Rad begrenzt, so wird geprüft, ob über das weitere Rad ein höheres Drehmoment absetzbar ist. Ist dies der Fall, so wird das für das weitere Rad eingestellte Solldrehmoment vergrößert. Ist die Bedingung hingegen nicht erfüllt, so wird das Differenzdrehzahlminimum erhöht. Greift hingegen die Drehzahlregelung für das weitere Rad, so wird geprüft, ob über das Rad ein höheres Drehmoment absetzbar ist. Ist dies der Fall, so wird das für das Rad eingestellte Solldrehmoment vergrößert. Falls die Bedingung nicht zutrifft, so wird das Differenzdrehzahlmaximum erhöht.

Wird für keines der Räder eine Drehmomentreduktion durchgeführt, so wird eine eventuell vorliegende Differenz zwischen dem an dem Rad anliegenden Istdrehmoment und dem an dem weiteren Rad anliegenden weiteren Istdrehmoment vorzugsweise durch entsprechendes Einstellen der Solldrehmomente reduziert, nämlich insbesondere bis die Differenz gleich Null ist. Zusätzlich werden das Differenzdrehzahlmaximum und das Differenzdrehzahlminimum wieder auf ihre ursprünglichen Werte zurückgesetzt, sofern sie zuvor verändert beziehungsweise angepasst wurden.

Insgesamt hat die Begrenzung der Differenz zwischen den Istdrehmomenten auf die Differenzdrehmomentobergrenze die höchste Priorität, gefolgt von der Einhaltung des Drehzahlbands, welches durch das Differenzdrehzahlmaximum und das Differenzdrehzahlminimum begrenzt ist. Geringere Priorität weist die Drehzahlbegrenzung der einzelnen Räder beziehungsweise der einzelnen Traktionsmaschinen und die geringste Priorität das Einstellen des Istdrehmoments auf das vorgegebene Solldrehmoment auf. Während einer Kurvenfahrt des Kraftfahrzeugs kann es vorgesehen sein, Drehmoment gezielt an ein Kurvenäußeres der Räder zu verschieben, damit das Fahrverhalten des Kraftfahrzeugs verbessert wird.

Im Rahmen dieser Beschreibung sind unter anderem eine absoluten Drehzahlbegrenzung und die Einhaltung einer Differenzdrehzahl erwähnt. Die absolute Drehzahlbegrenzung wird beispielsweise für Räder unterschiedlicher Radachsen durchgeführt, nämlich derart, dass Drehmoment von dem Rad zu dem weiteren Rad oder umgekehrt verschoben wird. Es kann jedoch auch vorgesehen sein, dass die Räder derselben Radachse zugeordnet sind und dennoch das Drehmoment zwischen ihnen verschoben wird. Die Einhaltung der Differenzdrehzahl kann zwischen den Rädern derselben Radachse oder Rädern unterschiedlicher Radachsen erfolgen. Die Prinzipien der absoluten Drehzahlbegrenzung und der Einhaltung der Differenzdrehzahl können separat angewandt, aber auch beliebig miteinander kombiniert werden. Dies gilt insbesondere für Räder derselben Radachse und unterschiedlichen Fahrspuren einerseits sowie für Räder unterschiedlicher Radachsen und derselben Fahrspur andererseits.

Für Räder unterschiedlicher Radachsen und derselben Fahrspur können folgende Vorgehensweisen vorgesehen sein. Einerseits kann die Differenzdrehzahlbegrenzung realisiert sein, sodass bei sehr niedriger Differenzdrehzahl zwischen den Rädern der Radachsen das Moment schnell umverteilt wird, damit die Drehzahlen beider Achsen möglichst synchron hochlaufen. Andererseits kann im Rahmen der absoluten Drehzahlbegrenzung vorgesehen sein, dass es eine absolute Maximaldrehzahl gibt, weil die Achsen nicht unendlich hochdrehen sollen, um die Räder in dem optimalen Schlupfbereich zu halten. Eine Kombination dieser Maßnahmen hat den Effekt, dass die Räder der Radachsen mit möglichst synchroner Drehzahl bis zum traktionsoptimalen Schlupf hochdrehen. Dann greift die absolute Drehzahlbegrenzung und die Achsen drehen nicht weiter hoch.

Für Räder derselben Radachse, die unterschiedlichen Fahrspuren zugeordnet sind, können folgende Vorgehensweisen vorgesehen sein: Einerseits kann die Differenzdrehzahlbegrenzung realisiert sein, sodass bei sehr niedriger Differenzdrehzahl zwischen den Rädern das Moment schnell umverteilt wird, damit die Drehzahlen beider Räder möglichst synchron hochlaufen. In die vorgegebene Differenzdrehzahl kann der Kurvenradius mit eingehen, damit ein Verspannen verhindert wird. Hierdurch wird eine sehr gute Fahrdynamik erzielt. In anderen Worten wird dem Rad und dem weiteren Rad eine Differenzdrehzahl aufgezwungen, sodass diese gezielt in unterschiedlichen Schlupfbereichen betrieben werden können. Andererseits kann im Rahmen der absoluten Drehzahlbegrenzung vorgesehen sein, dass eine absolute Maximaldrehzahl vorgegeben wird, weil die Räder nicht unendlich hochdrehen sollen, um die Räder in dem optimalen Schlupfbereich zu halten. Aus diesen Maßnahmen ergibt sich der Effekt, dass beide Räder mit möglichst synchroner Drehzahl bis zum traktionsoptimalen Schlupf hochdrehen. Dann greift die absolute Drehzahlbegrenzung und die Räder drehen nicht weiter hoch.

Die Erfindung betrifft weiterhin ein Kraftfahrzeug, insbesondere zur Durchführung des Verfahrens gemäß den Ausführungen im Rahmen dieser Beschreibung, mit einer Antriebseinrichtung, die zumindest eine elektrische Traktionsmaschine aufweist, wobei zum Bereitstellen eines Drehmoments an einem Rad des Kraftfahrzeugs an einem Steuergerät der Traktionsmaschine ein Solldrehmoment einstellbar und mittels des Steuergeräts eine Drehmomentregelung zum Einstellen eines von der Traktionsmaschine erzeugten Istdrehmoments durchführbar ist.

Dabei ist vorgesehen, dass das Kraftfahrzeug dazu ausgebildet ist, an dem Steuergerät zusätzlich einen Drehzahlsollbereich einzustellen und bei Vorliegen einer Istdrehzahl des Rads in dem Drehzahlsollbereich das Istdrehmoment im Zuge der Drehmomentregelung auf das Solldrehmoment zu regeln und bei Vorliegen der Istdrehzahl außerhalb des Drehzahlsollbereichs die Drehmomentregelung derart durchzuführen, dass sich die Istdrehzahl in Richtung des Drehzahlsollbereichs verändert.

Auf die Vorteile einer derartigen Vorgehensweise beziehungsweise einer derartigen Ausgestaltung des Kraftfahrzeugs wurde bereits hingewiesen. Sowohl das Kraftfahrzeug als auch das Verfahren zu seinem Betreiben können gemäß den Ausführungen im Rahmen dieser Beschreibung weitergebildet sein, sodass insoweit auf dies verwiesen wird.

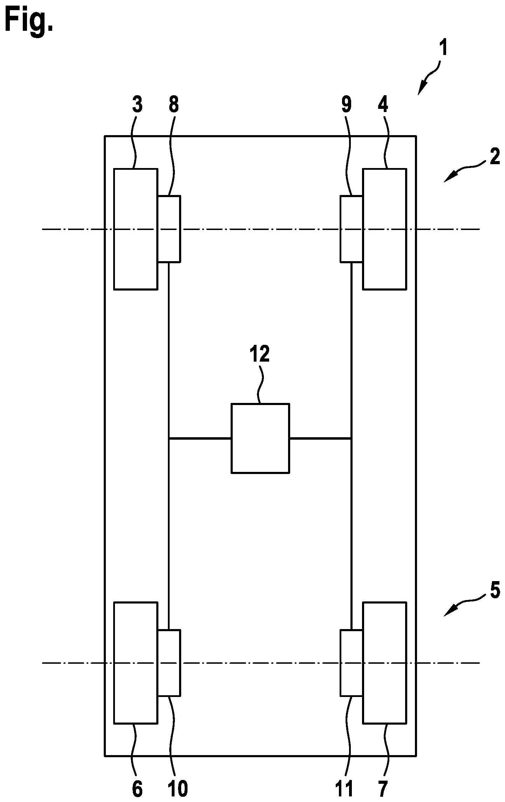

Die Erfindung wird nachfolgend anhand der in der Zeichnung dargestellten Ausführungsbeispiele näher erläutert, ohne dass eine Beschränkung der Erfindung erfolgt. Dabei zeigt die einzige
- Figur: eine schematische Darstellung eines Kraftfahrzeugs mit zwei Radachsen.

Die Figur zeigt eine schematische Darstellung eines Kraftfahrzeugs 1, welches eine erste Radachse 2 mit Rädern 3 und 4 sowie eine zweite Radachse 5 mit Rädern 6 und 7 aufweist. Die erste Radachse 2 ist beispielsweise eine Vorderachse und die zweite Radachse 5 eine Hinterachse des Kraftfahrzeugs 1. Entsprechend sind die Räder 3 und 4 Vorderräder und die Räder 6 und 7 Hinterräder des Kraftfahrzeugs 1. Die Räder 3 und 6 sind einer ersten Fahrspur und die Räder 4 und 7 einer zweiten Fahrspur zugeordnet. Das bedeutet, dass die Räder 3 und 6 auf einer ersten Seite und die Räder 4 und 7 auf einer zweiten Seite des Kraftfahrzeugs 1 in lateraler Richtung angeordnet sind. Die Räder 3, 4, 6 und 7 sind mittels Traktionsmaschinen 8, 9, 10 und 11 antreibbar, wobei jeder der Traktionsmaschinen 8, 9, 10 und 11 ein hier nicht dargestelltes Steuergerät zugeordnet ist. Das Steuergerät jeder der Traktionsmaschinen 8, 9, 10 und 11 ist an ein Zentralsteuergerät 12 angeschlossen.

Mithilfe des Zentralsteuergeräts 12 und der Steuergeräte der Traktionsmaschinen 8, 9, 10 und 11 können unterschiedliche Drehmomentverteilungen auf die Räder 3, 4, 6 und 7 eingestellt werden. Beispielsweise ist es für jedes der Räder 3, 4, 6 und 7 separat vorgesehen, dass an dem Steuergerät der jeweiligen Traktionsmaschine 8, 9, 10 und 11 ein Solldrehmoment eingestellt und mittels des Steuergeräts eine Drehmomentregelung zum Einstellen eines von der Traktionsmaschine 8, 9, 10 und 11 erzeugten Istdrehmoments durchzuführen. Zusätzlich wird an dem Steuergerät ein Drehzahlsollbereich eingestellt und bei Vorliegen einer Istdrehzahl des Rads 3, 4, 6 beziehungsweise 7 in dem Drehzahlsollbereich das Istdrehmoment im Zuge der Drehmomentregelung auf das Solldrehmoment geregelt.

Ist hingegen die Istdrehzahl außerhalb des Drehzahlsollbereichs, so wird die Drehmomentregelung derart durchgeführt, dass sich die Istdrehzahl in Richtung des Drehzahlsollbereichs verändert. Es kann vorgesehen sein, dass die Drehmomentverteilung zwischen einem aus den Rädern 3, 4, 6 und 7 ausgewählten Rad und einem ebenfalls aus diesen Rädern ausgewählten weiteren Rad durchgeführt wird. Beispielsweise ist das Rad eines der Räder 3, 4 der ersten Radachse 2 und das weitere Rad eines der Räder 6 und 7 der zweiten Radachse 5 oder umgekehrt. Ebenso kann es sein, dass das Rad eines der Räder 8 und 10 und das weitere Rad eines der Räder 9 und 11 ist, wobei das Rad und das weitere Rad derselben Radsachse, also beispielsweise der ersten Radachse 2 oder der zweiten Radachse 5, zugeordnet sind.

Mit der im Rahmen dieser Beschreibung vorgestellten Vorgehensweise lässt sich ein äußerst gutes Fahrverhalten des Kraftfahrzeugs 1 realisieren, bei welchem insbesondere das an den Rädern 3, 4, 6 und 7 anliegende Drehmoment jeweils dem maximal absetzbaren Drehmoment an dem entsprechenden der Räder 3, 4, 6 und 7 entspricht. Somit wird im Falle eines Bremsvorgangs des Kraftfahrzeugs 1 eine rasche Verzögerung und im Falle eines Beschleunigungsvorgangs eine rasche Beschleunigung erzielt.

## Patentansprüche

1. Verfahren zum Betreiben eines Kraftfahrzeugs (1), mit einer Antriebseinrichtung, die zumindest eine elektrische Traktionsmaschine (8,9,10,11) aufweist, wobei zum Bereitstellen eines Drehmoments an einem Rad (3,4,6,7) des Kraftfahrzeugs (1) an einem Steuergerät der Traktionsmaschine (8,9,10,11) ein Solldrehmoment eingestellt und mittels des Steuergeräts eine Drehmomentregelung zum Einstellen eines von der Traktionsmaschine (8,9,10,11) erzeugten Istdrehmoments durchgeführt wird, wobei an dem Steuergerät zusätzlich ein Drehzahlsollbereich eingestellt und bei Vorliegen einer Istdrehzahl des Rads (3,4,6,7) in dem Drehzahlsollbereich das Istdrehmoment im Zuge der Drehmomentregelung auf das Solldrehmoment geregelt wird und bei Vorliegen der Istdrehzahl außerhalb des Drehzahlsollbereichs im Rahmen der Drehmomentregelung eine Drehzahlregelung unter Außerachtlassung des Solldrehmoments derart durchgeführt wird, dass sich die Istdrehzahl in Richtung des Drehzahlsollbereichs verändert, wobei das Istdrehmoment von dem eingestellten Solldrehmoment abweicht, **dadurch gekennzeichnet, dass** der Drehzahlsollbereich nach unten von einer Drehzahluntergrenze und nach oben von einer Drehzahlobergrenze begrenzt ist, die anhand einer Fahrgeschwindigkeit des Kraftfahrzeugs (1) und einem Schlupfoptimum des Rads (3,4,6,7) ermittelt werden.

2. Verfahren nach Anspruch 1, **dadurch gekennzeichnet, dass** bei einem Bremsvorgang des Kraftfahrzeugs (1) ein erster Teil eines an dem Rad (3,4,6,7) anliegenden Bremsdrehmoments mittels einer Betriebsbremse und ein zweiter Teil mittels der Traktionsmaschine (8,9,10,11) erzeugt wird, wobei der erste Teil kleiner gewählt wird als ein in dem Schlupfoptimum über das Rad (3,4,6,7) absetzbares Drehmoment.

3. Verfahren nach Anspruch 2,
**dadurch gekennzeichnet, dass** bei dem Bremsvorgang der zweite Teil des Bremsdrehmoments schneller aufgebaut wird als der erste Teil, wobei der zweite Teil des Bremsdrehmoments vergrößert wird, bis die Summe aus dem ersten Teil und dem zweiten Teil einem Sollbremsdrehmoment entspricht, und wobei nach dem Erreichen des Sollbremsdrehmoments durch die Summe aus dem ersten Teil und dem zweiten Teil der erste Teil bei dem Sollbremsdrehmoment entsprechender Summe weiter vergrößert wird.

4. Verfahren nach einem der Ansprüche 2 und 3,
**dadurch gekennzeichnet, dass** bei einem Beschleunigungsvorgang des Kraftfahrzeugs (1) bei Überschreiten der Drehzahlobergrenze durch die Istdrehzahl des Rads (3,4,6,7) das Istdrehmoment reduziert wird, bis die Istdrehzahl kleiner oder gleich der Drehzahlobergrenze ist, und das reduzierte Istdrehmoment oder die Differenz zwischen dem Solldrehmoment und dem reduzierten Istdrehmoment nach oder während des Reduzierens an ein weiteres Steuergerät übermittelt wird.

5. Verfahren nach einem der vorhergehenden Ansprüche, **dadurch gekennzeichnet, dass** das Rad (3,4,6,7) einer ersten Radachse (2,5) und ein weiteres Rad (3,4,6,7) des Kraftfahrzeugs (1) einer von der ersten Radachse (2,5) verschiedene zweiten Radachse (5,2) zugeordnet sind, wobei zum Bereitstellen eines Drehmoments an dem weiteren Rad (3,5,6,7) an einem weiteren Steuergerät einer weiteren Traktionsmaschine (8,9,10,11) ein weiteres Solldrehmoment eingestellt und mittels des weiteren Steuergeräts eine Drehmomentregelung zum Einstellen eines von der weiteren Traktionsmaschine (8,9,10,11) erzeugten weiteren Istdrehmoments durchgeführt wird, wobei dem weiteren Solldrehmoment die Differenz zwischen dem Solldrehmoment und dem reduzierten Istdrehmoment zugeschlagen wird.

6. Verfahren nach Anspruch 5,
**dadurch gekennzeichnet, dass** ein Zentralsteuergerät (12) ein Vorgabegesamtdrehmoment in ein erstes Vorgabedrehmoment und ein zweites Vorgabedrehmoment aufteilt, wobei das Solldrehmoment gleich dem ersten Vorgabedrehmoment und das weitere Solldrehmoment gleich dem zweiten Vorgabedrehmoment gesetzt und anschließend das Solldrehmoment an dem Steuergerät und das weitere Solldrehmoment an dem weiteren Steuergerät eingestellt werden, wobei vor dem Einstellen dem weiteren Solldrehmoment die Differenz zwischen dem Solldrehmoment und dem reduzierten Istdrehmoment zugeschlagen wird.

7. Verfahren nach einem der Ansprüche 1 bis 5, **dadurch gekennzeichnet, dass** das Rad (3,4,6,7) und das weitere Rad (3,4,6,7) derselben der Radachsen (2,5) und unterschiedlichen Radspuren zugeordnet oder unterschiedlichen der Radachsen (2,5) und derselben Radspur zugeordnet sind, wobei ein Differenzdrehzahlmaximum und ein Differenzdrehzahlminimum für eine Drehzahldifferenz zwischen der Drehzahl des Rads (3,4,6,7) und der Drehzahl des weiteren Rads (3,4,6,7) ermittelt werden und die Drehzahlobergrenze für das Rad (3,4,6,7) aus der Istdrehzahl des weiteren Rads (3,4,6,7) und dem Differenzdrehzahlmaximum und die Drehzahlobergrenze für das weitere Rad (3,4,6,7) aus der Istdrehzahl des Rads (3,4,6,7) und dem Differenzdrehzahlminimum ermittelt wird.

8. Verfahren nach einem der Ansprüche 5 bis 7,
**dadurch gekennzeichnet, dass** zusätzlich eine Differenzdrehmomentobergrenze bestimmt wird und die Drehmomentregelung für das Rad (3,4,6,7) und für das weitere Rad (3,4,6,7) derart durchgeführt wird, dass die Differenz zwischen dem an dem Rad (3,4,6,7) anliegenden Istdrehmoment und dem an dem weiteren Rad (3,4,6,7) anliegenden weiteren Istdrehmoment kleiner oder gleich der Differenzdrohmomentobergrenze ist.

9. Kraftfahrzeug (1), insbesondere zur Durchführung des Verfahrens nach einem oder mehreren der vorhergehenden Ansprüche, mit einer Antriebseinrichtung, die zumindest eine elektrische Traktionsmaschine (8,9,10,11) aufweist, wobei zum Bereitstellen eines Drehmoments an einem Rad (3,4,6,7) des Kraftfahrzeugs (1) an einem Steuergerät der Traktionsmaschine (8,9,10,11) ein Solldrehmoment einstellbar und mittels des Steuergeräts eine Drehmomentregelung zum Einstellen eines von der Traktionsmaschine (8,9,10,11) erzeugten Istdrehmoments durchführbar ist, wobei das Kraftfahrzeug (1) ausgebildet, an dem Steuergerät zusätzlich einen Drehzahlsollbereich einzustellen und bei Vorliegen einer Istdrehzahl des Rads (3,4,6,7) in dem Drehzahlsollbereich das Istdrehmoment im Zuge der Drehmomentregelung auf das Solldrehmoment zu regeln und bei Vorliegen der Istdrehzahl außerhalb des Drehzahlsollbereichs im Rahmen der Drehmomentregelung eine Drehzahlregelung unter Außerachtlassung des Solldrehmoments derart durchzuführen, dass sich die Istdrehzahl in Richtung des Drehzahlsollbereichs verändert, wobei das Istdrehmoment von dem eingestellten Solldrehmoment abweicht, **dadurch gekennzeichnet, dass** der Drehzahlsollbereich nach unten von einer Drehzahluntergrenze und nach oben von einer Drehzahlobergrenze begrenzt ist, die anhand einer Fahrgeschwindigkeit des Kraftfahrzeugs (1) und einem Schlupfoptimum des Rads (3,4,6,7) ermittelt werden.

## Claims

1. Method for operating a motor vehicle (1), having a drive apparatus, which comprises at least one electrical traction engine (8, 9, 10, 11), wherein for providing a torque at a wheel (3, 4, 6, 7) of the motor vehicle (1) a target torque is set at a control device of the traction engine (8, 9, 10, 11) and by means of the control device a torque closed-loop controlling is carried out for setting an actual torque generated by the traction engine (8, 9, 10, 11), wherein additionally a target rotational speed range is set at the control device and, when an actual rotational speed of the wheel (3, 4, 6, 7) lies within the target rotational speed range, the actual torque is regulated in the course of the torque closed-loop controlling to the target torque, and, when an actual rotational speed lies outside the target rotational speed range, in the context of the torque closed-loop controlling a rotational speed closed-loop controlling is carried out disregarding the target torque such that the actual rotational speed alters in the direction of the rotational speed target range, wherein the actual torque deviates from the set target torque, **characterised in that** the rotational speed target range is limited downward by a rotational speed lower limit and upward by a rotational speed upper limit, which are determined on the basis of a driving speed of the motor vehicle (1) and a slip optimum of the wheel (3, 4, 6, 7).

2. Method according to claim 1, **characterised in that** in the case of a braking procedure of the motor vehicle (1) a first part of a braking torque applied to the wheel (3, 4, 6, 7) is generated by means of a service brake and a second part by means of the traction engine (8, 9, 10, 11), wherein the first part is selected to be smaller than a torque that can be applied via the wheel (3, 4, 6, 7) in the slip optimum.

3. Method according to claim 2,
**characterised in that** in the braking procedure the second part of the braking torque is built up more rapidly than the first part, wherein the second part of the braking torque is increased until the sum of the first part and the second part equals a target braking torque, and wherein after achieving the target braking torque by means of the sum of the first part and the second part, the first part is further increased by a sum corresponding to the target braking torque.

4. Method according to any of claims 2 and 3,
**characterised in that** in the case of an acceleration of the motor vehicle (1), when the rotational speed upper limit is overshot by the actual rotational speed of the wheel (3, 4, 6, 7) the target torque is reduced until the actual rotational speed is smaller than or equal to the rotational speed upper limit, and the reduced actual torque or the difference between the target torque and the reduced actual torque is transmitted to a further control device after or during the reduction.

5. Method according to any of the preceding claims, **characterised in that** the wheel (3, 4, 6, 7) is assigned to a first wheel axis (2, 5) and a further wheel (3, 4, 6, 7) of the motor vehicle (1) is assigned to a second wheel axis (5, 2) different from the first wheel axis (2, 5), wherein for providing a torque at the further wheel (3, 5, 6, 7) a further target torque is set at a further control device of a further traction engine (8, 9, 10, 11) and by means of the further control device a torque regulation is carried out for setting a further actual torque generated by the further traction engine (8, 9, 10, 11), wherein the difference between the target torque and the reduced actual torque is added to the further target torque.

6. Method according to claim 5,
**characterised in that** a central control device (12) divides a preset total torque into a first preset torque and a second preset torque, wherein the target torque is set as being equal to the first preset torque and the further target torque is set as being equal to the second preset torque and subsequently the target torque is set at the control device and the further target torque is set at the further control device, wherein prior to the setting the difference between the target torque and the reduced actual torque is added to the further target torque.

7. Method according to any of claims 1 to 5, **characterised in that** the wheel (3, 4, 6, 7) and the further wheel (3, 4, 6, 7) are assigned to the same one of the wheel axes (2, 5) and to different wheel tracks, or to different ones of the wheel axes (2, 5) and the same wheel track, wherein a maximum difference in rotational speed and a minimum difference in rotational speed are determined for a difference in rotational speed between the rotational speed of the wheel (3, 4, 6, 7) and the rotational speed of the further wheel (3, 4, 6, 7) and the upper limit for the rotational speed for the wheel (3, 4, 6, 7) is determined from the actual rotational speed of the further wheel (3, 4, 6, 7) and the maximum difference in rotational speed and the upper limit for the rotational speed for the further wheel (3, 4, 6, 7) is determined from the actual rotational speed of the wheel (3, 4, 6, 7) and the minimum difference in rotational speed.

8. Method according to any of claims 5 to 7,
**characterised in that** in addition a upper limit to the difference in rotational speed is specified and the closed-loop regulation of the torque for the wheel (3, 4, 6, 7) and for the further wheel (3, 4, 6, 7) is carried out such that the difference between the actual torque applied to the wheel (3, 4, 6, 7) and the further actual torque applied to the further wheel (3, 4, 6, 7) is less than or equal to the upper limit to the difference in rotational speed.

9. Motor vehicle (1), in particular for carrying out the method according to one or more of the preceding claims, having a drive apparatus which comprises at least one electrical traction engine (8, 9, 10, 11), wherein for providing a torque at one wheel (3, 4, 6, 7) of the motor vehicle (1), a target torque can be set at a control device of the traction engine (8, 9, 10, 11) and by means of the control device a torque closed-loop controlling can be carried out for setting an actual torque generated by the traction engine (8, 9, 10, 11), wherein the motor vehicle (1) is designed additionally to set a target rotational speed range at the control device and, when an actual rotational speed of the wheel (3, 4, 6, 7) lies within the target rotational speed range, to control the actual torque in the course of the torque closed-loop controlling to the target torque, and when the actual rotational speed lies outside the rotational speed target range, in the context of the torque closed-loop controlling to carry out a rotational speed closed-loop control disregarding the target torque, such that the actual rotational speed alters in the direction of the rotational speed target range, wherein the actual torque deviates from the set target torque, **characterised in that** the rotational speed target range is limited downward by a rotational speed lower limit and upward by a rotational speed upper limit, which are determined on the basis of a driving speed of the motor vehicle (1) and a slip optimum of the wheel (3, 4, 6, 7).

## Revendications

1. Procédé permettant de faire fonctionner un véhicule à moteur (1), au moyen d'un appareil de propulsion qui présente au moins une machine de traction électrique (8, 9, 10, 11), dans lequel, pour fournir un couple à une roue (3, 4, 6, 7) du véhicule à moteur (1), un couple cible est réglé sur un dispositif de commande de la machine de traction (8, 9, 10, 11) et au moyen du dispositif de commande de couple, une régulation de couple est effectuée pour régler un couple réel généré par la machine de traction (8, 9, 10, 11), dans lequel une plage cible de régimes est également réglée sur le dispositif de commande, et lorsque le régime réel de la roue (3, 4, 6, 7) se trouve dans la plage cible de régimes, le couple réel est régulé sur le couple cible au cours de la régulation de couple, et lorsque le régime réel se trouve à l'extérieur de la plage cible de régime dans le cadre de la régulation de couple, une régulation de régime est effectuée, sans tenir compte du couple cible , de telle sorte que le régime réel varie en direction de la plage cible de régimes, dans lequel le couple réel s'écarte du couple cible réglé, **caractérisé en ce que** la plage cible de régimes est limitée vers le bas par une limite de régime inférieure et vers le haut par une limite de régime supérieure, qui est déterminée sur la base d'une vitesse de conduite du véhicule à moteur (1), et d'un glissement optimum de la roue (3, 4, 6, 7).

2. Procédé selon la revendication 1, **caractérisé en ce que** lors d'un processus de freinage du véhicule à moteur (1), une première partie d'un couple de freinage appliqué à la roue (3, 4, 6, 7) est produite au moyen d'un frein de service et une seconde partie est produite au moyen de la machine de traction (8, 9, 10, 11), dans lequel la première partie est choisie inférieure à un couple pouvant être déduit via la roue (3, 4, 6, 7) dans le glissement optimum.

3. Procédé selon la revendication 2,
**caractérisé en ce que** pendant le processus de freinage, la seconde partie du couple de freinage est établie plus rapidement que la première partie, dans lequel la seconde partie du couple de freinage est augmentée jusqu'à ce que la somme de la première partie et de la seconde partie corresponde à un couple de freinage cible, et dans lequel après avoir atteint le couple de freinage cible par la somme de la première partie et de la seconde partie, la première partie est augmentée davantage par la somme correspondant au couple de freinage cible.

4. Procédé selon l'une quelconque des revendications 2 et 3,
**caractérisé en ce que** pendant un processus d'accélération du véhicule à moteur (1), lorsque le régime réel de la roue (3, 4, 6, 7) dépasse la limite de régime supérieure, le couple réel est réduit jusqu'à ce que le régime réel soit inférieur ou égal à la limite de régime supérieure, et le couple réel réduit ou la différence entre le couple cible et le couple réel réduit est transmise à un dispositif de commande supplémentaire après ou pendant la réduction.

5. Procédé selon l'une quelconque des revendications précédentes, **caractérisé en ce que** la roue (3, 4, 6, 7) d'un premier essieu de roue (2, 5) et une roue supplémentaire (3, 4, 6, 7) du véhicule à moteur (1) sont associées à un second essieu de roue (5, 2) différent du premier essieu de roue (2, 5), dans lequel pour fournir un couple à la roue (3, 5, 6, 7), un couple cible supplémentaire est réglé sur un dispositif de commande supplémentaire d'une machine de traction supplémentaire (8, 9, 10, 11) et au moyen du dispositif de commande supplémentaire, une régulation de couple est effectuée pour régler un couple réel supplémentaire généré par la machine de traction supplémentaire (8, 9, 10, 11), dans lequel la différence entre le couple cible et le couple réel réduit est ajoutée au couple cible supplémentaire.

6. Procédé selon la revendication 5,
**caractérisé en ce qu'**un dispositif de commande central (12) divise un couple total par défaut en un premier couple par défaut et un second couple par défaut, dans lequel le couple cible est réglé égal au premier couple par défaut et le couple cible supplémentaire est réglé égal au second couple par défaut, puis le couple cible est réglé sur le dispositif de commande et le couple cible supplémentaire est réglé sur le dispositif de commande supplémentaire, dans lequel avant de régler le couple cible supplémentaire, la différence entre le couple cible et le coupleréel réduit est ajoutée.

7. Procédé selon l'une quelconque des revendications 1 à 5, **caractérisé en ce que** la roue (3, 4, 6, 7) et la roue supplémentaire (3, 4, 6, 7) sont associées au même des essieux de roue (2, 5) et à des voies de roue différentes ou sont associées à des essieux de roue différents (2, 5) et à la même voie de roue, dans lequel un régime différentiel maximum et un régime différentiel minimum pour une différence de régime entre le régime de la roue (3, 4, 6, 7) et le régime de la roue supplémentaire (3, 4, 6, 7) sont déterminés et la limite de régime supérieure pour la roue (3, 4, 6, 7) est déterminée à partir du régime réel de la roue supplémentaire (3, 4, 6,7) et du régime différentiel maximum, et la limite de régime supérieure pour la roue supplémentaire (3, 4, 6, 7) est déterminée à partir du régime réel de la roue (3, 4, 6, 7) et du régime différentiel minimum.

8. Procédé selon l'une quelconque des revendications 5 à 7,
**caractérisé en ce qu'**une limite supérieure de couple différentielle est en outre déterminée et la régulation de couple pour la roue (3, 4, 6, 7) et pour la roue supplémentaire (3, 4, 6, 7) est effectuée de telle manière que la différence entre le couple réel présent au niveau de la roue (3, 4, 6, 7) et le couple réel supplémentaire présent au niveau de la roue supplémentaire (3, 4, 6, 7) soit inférieure ou égale à la limite supérieure de couple différentielle.

9. Véhicule à moteur (1), en particulier pour la mise en oeuvre du procédé selon une ou plusieurs des revendications précédentes, au moyen d'un appareil de propulsion qui comporte au moins une machine de traction électrique (8, 9, 10, 11), dans lequel, pour fournir un couple à une roue (3, 4, 6, 7) du véhicule à moteur (1), un couple cible est réglé sur un dispositif de commande de la machine de traction (8, 9, 10, 11) et au moyen du dispositif de commande, une régulation de couple peut être effectuée pour régler un couple réel généré par la machine de traction (8, 9, 10, 11), dans lequel le véhicule à moteur (1) est conçu pour régler en outre une plage cible de régimes sur le dispositif de commande, et lorsque le régime réel de la roue (3, 4, 6, 7) se trouve dans la plage cible de régimes, le couple réel est réglé sur le couple cible au cours de la régulation de couple, et lorsque le régime réel se trouve à l'extérieur de la plage cible de régime dans le cadre de la régulation de couple, une régulation de régime est effectuée, sans tenir compte du couple cible , de telle sorte que le régime réel varie en direction de la plage cible de régimes, dans lequel le couple réel s'écarte du couple cible réglé, **caractérisé en ce que** la plage de régimes est limitée vers le bas par une limite de régime inférieure et vers le haut par une limite de régime supérieure, qui est déterminée sur la base d'une vitesse de conduite du véhicule à moteur (1), et d'un glissement optimum de la roue (3, 4, 6, 7).
